(19)

Europäisches
Patentamt
European
Patent Office
Office européen
des brevets

(11) **EP 3 823 282 A1**

(12) **EUROPEAN PATENT APPLICATION**
published in accordance with Art. 153(4) EPC

(43) Date of publication:
**19.05.2021 Bulletin 2021/20**

(21) Application number: **18927602.5**

(22) Date of filing: **27.07.2018**

(51) Int Cl.:
*H04N 19/124* (2014.01)    *H04N 19/139* (2014.01)
*H04N 19/146* (2014.01)

(86) International application number:
**PCT/CN2018/097668**

(87) International publication number:
**WO 2020/019354 (30.01.2020 Gazette 2020/05)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(71) Applicant: **SZ DJI Technology Co., Ltd.**
**Shenzhen, Guangdong 518057 (CN)**

(72) Inventors:
• **MIAO, Zexiang**
 **Shenzhen, Guangdong 518057 (CN)**
• **ZHENG, Xiaozhen**
 **Shenzhen, Guangdong 518057 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **VIDEO ENCODING METHOD AND DEVICE, AND COMPUTER READABLE STORAGE MEDIUM**

(57)    The present disclosure provides a video coding method, a computer-readable storage medium, and an electronic device. The video coding method includes: determining an initial quantization parameter of a to-be-coded key frame in a current to-be-coded group of pictures (GOP); determining a quantization parameter offset of the to-be-coded key frame; and determining a quantization parameter for video coding the to-be-coded key frame according to the initial quantization parameter and the quantization parameter offset. The quantization parameter of the to-be-coded key frame used in the video coding is a value obtained by correcting the initial quantization parameter by the quantization parameter offset. In other words, the quantization parameter of the to-be-coded key frame may be adjusted by the quantization parameter offset. Thus, under a certain bit rate condition, the number of bits for coding the key frame may be reasonably allocated.

```
┌────────────────────────────────────────┐
│ Determine an initial quantization      │ ⌐ S101
│ parameter of a to-be-coded key frame   │
│ in a current to-be-coded group of      │
│ pictures (GOP)                         │
└────────────────────────────────────────┘
                    │
                    ▼
┌────────────────────────────────────────┐
│ Determine a quantization parameter     │ ⌐ S102
│ offset of the current to-be-coded key  │
│ frame                                  │
└────────────────────────────────────────┘
                    │
                    ▼
┌────────────────────────────────────────┐
│ Determine a quantization parameter     │ ⌐ S103
│ according to the initial quantization  │
│ parameter and the quantization         │
│ parameter offset                       │
└────────────────────────────────────────┘
```

FIG. 4

EP 3 823 282 A1

## Description

### TECHNICAL FIELD

The present disclosure relates to the technical field of video coding and, more particularly, to a video coding method and apparatus, a computer-readable storage medium, and an electronic device.

### BACKGROUND

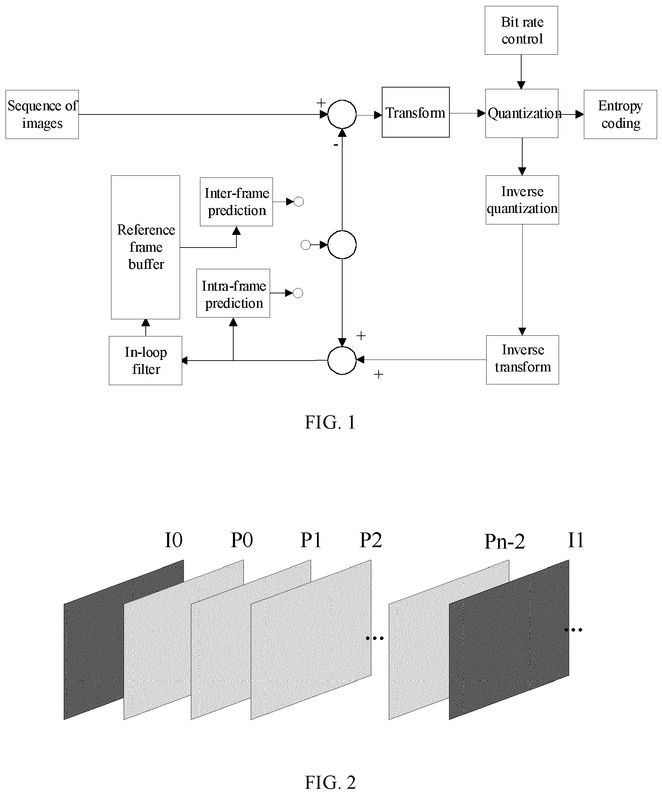

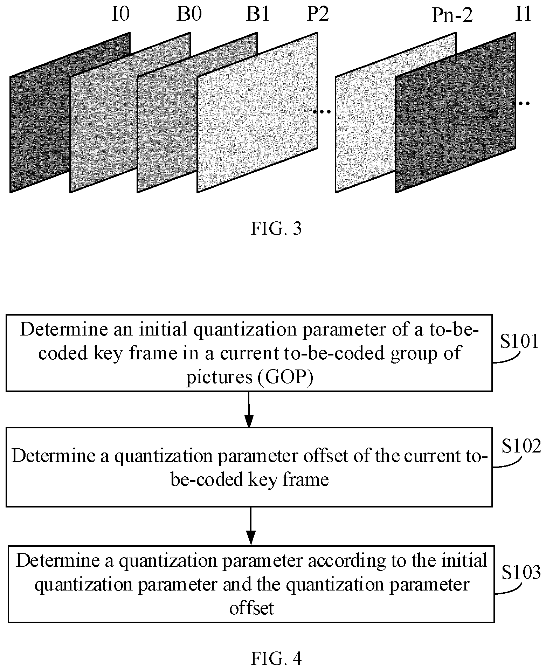

Video coding, also known as video data compression, aims to remove various redundant data from video data. Referring to FIG. 1, the video coding process often includes prediction, transformation, quantization, and entropy coding. The prediction includes intra-frame prediction and inter-frame prediction. The intra-frame prediction uses spatial information of a currently coded frame to eliminate redundant information. The inter-frame prediction may use time domain information adjacent to the currently coded frame to eliminate redundant information. An image frame coded only based on inter-frame prediction is called an I-frame. An image frame coded based on both the intra-frame prediction and a unidirectional inter-frame prediction is called a P-frame. An image frame coded based on both the intra-frame prediction and a bidirectional inter-frame prediction is called a B-frame. In general, a coding structure of a video sequence includes a plurality of groups of pictures (GOP). Referring to FIG. 2 and FIG. 3, each GOP includes a key frame (e.g., an I-frame) and a plurality of non-key frames (e.g., P-frames, B-frames). The first frame of each GOP is a key frame. The key frame is a reference frame for the non-key frames, and plays an important role in the video coding.

In the process of the video coding, when majority of bits are used to code the key frame (e.g., the I-frame) in the GOP, reconstruction quality of the key frame may be improved, and hence inter-frame prediction efficiency of subsequent non-key frames (e.g., P-frames) in the GOP may be increased. However, under the condition of constant bit rate, when the majority of bits are used to code the key frame in the GOP, the number of bits used to code the subsequent non-key frames in the GOP may be reduced, thereby degrading the reconstruction quality of the subsequent non-key frames in the GOP. On the other hand, when more bits are used to code the non-key frames in the GOP, the reconstruction quality of the key frame in the GOP may be degraded, thereby degrading the inter-frame prediction efficiency of the subsequent non-key frames in the GOP. Therefore, how to reasonably allocate the number of bits used to code the key frame (e.g., the I-frame) and the non-key frames (e.g., the P-frames) is a problem that needs to be solved.

### SUMMARY

The present disclosure provides a video coding method, a computer-readable storage medium, and an electronic device, capable of dynamically allocating the number of bits for coding a key frame (e.g., an I-frame) and a quantization parameter, thereby achieving a more desirable video coding quality.

In accordance with the disclosure, there is provided a video coding method. The method includes:

determining an initial quantization parameter of a to-be-coded key frame in a current to-be-coded group of pictures (GOP);

determining a quantization parameter offset of the to-be-coded key frame; and

determining a quantization parameter for video coding the to-be-coded key frame according to the initial quantization parameter and the quantization parameter offset.

Also in accordance with the disclosure, there is provided a video coding apparatus. The apparatus includes:

a quantization parameter calculation module configured to determine an initial quantization parameter of a to-be-coded key frame in a current to-be-coded group of pictures (GOP);

an offset determination module configured to determine a quantization parameter offset of the to-be-coded key frame; and

a correction module configured to determine a quantization parameter for video coding the to-be-coded key frame according to the initial quantization parameter and the quantization parameter offset.

Also in accordance with the disclosure, there is provided a computer-readable storage medium storing a computer program. The computer program is executed by a processor to perform:

determining an initial quantization parameter of a to-be-coded key frame in a current to-be-coded group of pictures (GOP);

determining a quantization parameter offset of the to-be-coded key frame; and

determining a quantization parameter for video coding the to-be-coded key frame according to the initial quantization parameter and the quantization parameter offset.

Also in accordance with the disclosure, there is provided an electronic device including a memory, a processor, and a computer program stored in the memory and executed by the processor. The processor executes the computer program to perform:

determining an initial quantization parameter of a to-be-coded key frame in a current to-be-coded group of pictures (GOP);

determining a quantization parameter offset of the to-be-coded key frame; and

determining a quantization parameter for video coding the to-be-coded key frame according to the initial quantization parameter and the quantization parameter offset.

It can be seen from the technical solutions provided by the above embodiments of the present disclosure that the present disclosure determines the initial quantization parameter of the to-be-coded key frame in the current to-be-coded GOP, determines the quantization parameter offset of the to-be-coded key frame, and then determines the quantization parameter for video coding the to-be-coded key frame according to the initial quantization parameter and the quantization parameter offset. The quantization parameter of the to-be-coded key frame used in the video coding is a value obtained by correcting the initial quantization parameter by the quantization parameter offset. In other words, the quantization parameter of the to-be-coded key frame may be adjusted by the quantization parameter offset. Thus, under a certain bit rate condition, the number of bits for coding the key frame may be reasonably allocated.

## BRIEF DESCRIPTION OF THE DRAWINGS

To more clearly illustrate the technical solution of the present disclosure, the accompanying drawings used in the description of the disclosed embodiments are briefly described hereinafter. The drawings described below are merely some embodiments of the present disclosure. Other drawings may be derived from such drawings by a person with ordinary skill in the art without creative efforts and may be encompassed in the present disclosure.

FIG. 1 is a schematic flow chart of video coding according to an example embodiment of the present disclosure.

FIG. 2 is a schematic diagram of a coding structure of a video sequence according to an example embodiment of the present disclosure.

FIG. 3 is a schematic diagram of a coding structure of a video sequence according to another example embodiment of the present disclosure.

FIG. 4 is a schematic flow chart of a video coding method according to an example embodiment of the present disclosure.

FIG. 5 is a schematic diagram showing image frame segmentation according to an example embodiment of the present disclosure.

FIG. 6 is a schematic diagram showing global motion vectors of various image frames in a group of pictures (GOP) according to an example embodiment of the present disclosure.

FIG. 7 is a schematic diagram showing global motion vectors of various image frames in a group of pictures (GOP) according to another example embodiment of the present disclosure.

FIG. 8 is a schematic structural diagram of a video coding apparatus according to an example embodiment of the present disclosure.

FIG. 9 is a schematic structural diagram of an electronic device according to an example embodiment of the present disclosure.

**DETAILED DESCRIPTION OF THE EMBODIMENTS**

Embodiments of the present disclosure are described in detail below with reference to the accompanying drawings. Same or similar reference numerals in the drawings represent the same or similar elements or elements having the same or similar functions throughout the specification. It will be appreciated that the described embodiments are some rather than all of the embodiments of the present disclosure. Other embodiments obtained by those having ordinary skills in the art on the basis of the described embodiments without inventive efforts should fall within the scope of the present disclosure.

Embodiments of the present disclosure are described in detail below with reference to the accompanying drawings. In the case of no conflict, the following embodiments and features of the embodiments can be combined with each other.

As shown in FIG. 4, the present disclosure provides a video coding method. The method may be applied to an electronic device with a video coding function, such as a video encoder. The method includes the following steps.

At S101, an initial quantization parameter (QP0) of a key frame to be coded (referred to as a current to-be-coded key frame) in a current to-be-coded group of pictures (GOP) is determined. The key frame may be, for example, an I-frame.

At S102, a quantization parameter offset of the current to-be-coded key frame is determined.

At S103, the quantization parameter for video coding the current to-be-coded key frame is determined according to the initial quantization parameter and the quantization parameter offset.

In one embodiment, determining the initial quantization parameter of the to-be-coded key frame in the current to-be-coded GOP at S101 may include: calculating a target number of bits (targetBits) for video coding the current to-be-coded key frame; and according to the target number of bits and a total number of pixels (numOfPixel) of the current to-be-coded key frame, determining the initial quantization parameter of the current to-be-coded key frame.

In one embodiment, calculating the target number of bits for video coding the current to-be-coded key frame may include: obtaining pre-configured target bit rate (targetBitrate) and frame rate (frameRate); and according to the target bit rate and the frame rate, calculating the target number of bits for video coding the current to-be-coded key frame.

In one embodiment, calculating the target number of bits according to the target bit rate and the frame rate may include: performing calculation on the target bit rate and the frame rate according to a first specified formula to obtain the target number of bits.

The first specified formula can be the following formula (1):

$$targetBits = \frac{targetBitrate}{frameRate}, \qquad\qquad (1)$$

where *targetBits* is the target number of bits, *targetBitrate* is the target bit rate, and *frameRate* is the frame rate.

In one embodiment, determining the initial quantization parameter of the current to-be-coded key frame according to the target number of bits and the total number of pixels of the current to-be-coded key frame may include: performing calculation on the target number of bits and the total number of pixels of the current to-be-coded key frame according to a second specified formula to obtain the initial quantization parameter of the current to-be-coded key frame.

The second specified formula can be the following formula (2):

$$QP0 = \frac{\ln\left(\frac{targetBits}{numOfPixel}\right) - \beta}{\alpha}, \qquad\qquad (2)$$

where *numOfPixel* is the total number of pixels of the current to-be-coded key frame, and $\alpha$ and $\beta$ are constants derived from an empirical bit rate control model.

It should be noted that the embodiments of the present disclosure may also determine the initial quantization parameter of the current to-be-coded key frame in other ways, which is not limited by the embodiments of the present disclosure.

In one embodiment, determining the quantization parameter offset of the current to-be-coded key frame at S102 may include: determining a candidate coding GOP; determining a global motion vector (GMV) of the key frame and global motion vectors of the non-key frames in the candidate coding GOP; and according to the GMV of the key frame and the GMVs of the non-key frames in the candidate coding GOP, determining the quantization parameter offset of the current to-be-coded key frame.

The candidate coding GOP may be the current to-be-coded GOP and/or the GOP preceding the current to-be-coded GOP at least by one. It should be noted that the key frame and the non-key frames in the current to-be-coded GOP are image frames to be coded while the key frame and the non-key frames in the GOP preceding the current to-be-coded GOP are already coded image frames.

For example, the quantization parameter offset of the current to-be-coded key frame may be calculated based on the GMV of the key frame and the GMVs of the non-kay frames in the current to-be-coded GOP (i.e., the GOP to which the current to-be-coded key frame belongs), may be calculated based on the GMV of the key frame and the GMVs of the non-key frames in the GOP preceding the current to-be-coded GOP at least by one, or may be calculated based on the GMV of the key frame and the GMVs of the non-key frames in the current to-be-coded GOP and the GOP preceding the current to-be-coded GOP at least by one.

In specific implementation, one of the above options may be configured according to the actual requirements. In one example, in a first GOP, the quantization parameter offset of the key frame $I_0$ may be calculated based on the GMVs of the picture frames in the first GOP. In a second GOP, the quantization parameter offset of the key frame $I_1$ may be calculated based on the GMVs of the picture frames in the second GOP. In another example, in the first GOP, the quantization parameter offset of the key frame $I_0$ may be calculated based on the GMVs of the picture frames in the first GOP. In the second GOP, the quantization parameter offset of the key frame $I_1$ may be calculated based on the GMVs of the picture frames in the GOP preceding the second GOP by one (i.e., the first GOP). In another example, in the first GOP, the quantization parameter offset of the key frame $I_0$ may be set to zero (i.e., the initial quantization parameter is used as the quantization parameter of the key frame $I_0$). In the second GOP, the quantization parameter offset of the key frame $I_1$ may be calculated based on the GMVs of the picture frames in the GOP preceding the second GOP by one (i.e., the first GOP).

In the embodiments of the present disclosure, determining the GMV of the picture frame may include: according to the GMV of the image frame relative to a forward reference frame and/or the GMV of the image frame relative to a backward reference frame, determining the GMV of the image frame.

For example, the determination may be one of the following manners.

In the first manner, for any image frame, a motion vector of the image frame relative to the reference image frame thereof is calculated as the GMV of the image frame.

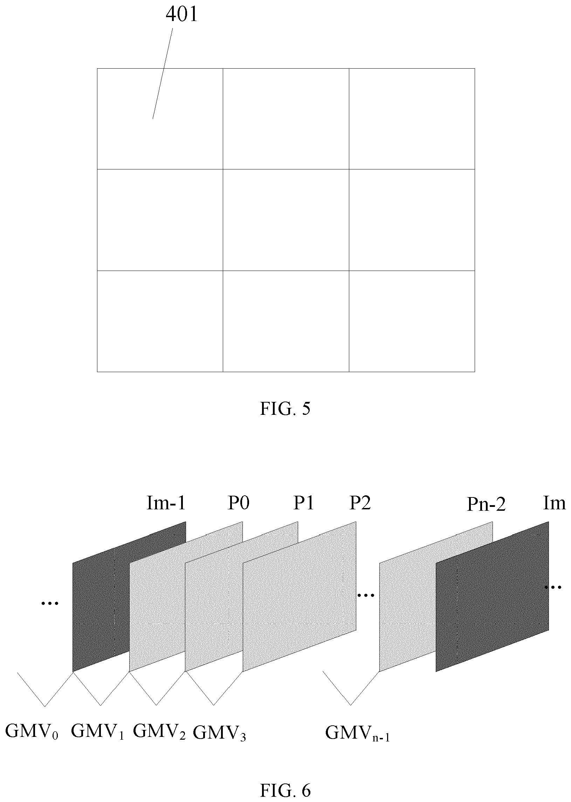

In the second manner, for any image frame, the image frame is divided into a plurality of regions (e.g., 9 regions 401 shown in FIG. 5). The motion vector of each region in the image frame relative to the corresponding region in the reference image frame thereof is calculated. Then, an average of the absolute values of the motion vectors of all the regions in the image frame is calculated as the GMV of the image frame. That is, the absolute values of the motion vectors of all the regions are summed and averaged as the GMV of the image frame.

In one embodiment, determining the quantization parameter offset of the current to-be-coded key frame according to the GMV of the key frame and the GMVs of the non-key frames in the candidate coding GOP may include: according to the GMV of the key frame and the GMVs of the non-key frames in the candidate coding GOP, determining a weighted GMV of the current to-be-coded key frame; and according to a pre-configured mapping relationship between the weighted GMV and the quantization parameter offset, determining the quantization parameter offset of the current to-be-coded key frame.

The quantization parameter offset may be a quantization parameter offset value or a quantization parameter offset coefficient.

In one embodiment, determining the weighted GMV of the current to-be-coded key frame according to the GMV of the key frame and the GMVs of the non-key frames in the candidate coding GOP may include: performing a weighted summation of on the GMV of the key frame and the GMVs of the non-key frames in the candidate coding GOP to obtain the weighted GMV of the current to-be-coded key frame.

It should be noted that, in the embodiments of the present disclosure, the weight of the GMV of the image frame and the interval between the image frame and the current to-be-coded key frame may be configured in a negative correlation relationship. In other words, the closer the image frame is to the current to-be-coded key frame, the greater the weight of the GMV of the image frame. It should be understood that the weight may also be related to a compression ratio of the image frame. For example, a B-frame with a high compression ratio may be given a relatively small weight.

For example, referring to FIG. 6, in some embodiments, each GOP includes 1 I-frame and n-1 P-frames. The current to-be-coded GOP is (m+1)-th GOP. The initial to-be-coded key frame is $I_0$. The current to-be-coded key frame is $I_m$. The candidate coding GOP is m-th GOP. The GMVs of the image frames in the m-th GOP starting from the key frame $I_{m-1}$ are $GMV_0$, $GMV_1$, $GMV_2$, ..., $GMV_{n-1}$, respectively. A third specified formula (3) may be used to calculate the weighted $GMV_{weighted}$ of the current to-be-coded key frame:

$$GMV_{weighted} = \frac{n(n+1)}{2} \sum_{i=1}^{n} i * GMV_{i-1},\qquad (3)$$

In the formula (3), the coefficient i indicates that the closer the image frame is to the to-be-coded key frame, the greater weight if given to the GMV of the image frame. After the $GMV_{weighted}$ is obtained, the $GMV_{weighted}$ may be used to deduce the intensity of the motion of the video content. The greater the $GMV_{weighted}$ is, the greater the change in the image content of the current to-be-coded key frame $I_m$ in the current to-be-coded GOP is compared to the image content of each image frame in the preceding previously coded GOP, thereby reflecting that the greater the change in the video content, the more intense the motion. When the motion of the to-be-coded video is more intense, it indicates that the change of the image content between the image frames is greater. In this situation, the significance of the key frame (e.g., the I-frame) in the to-be-coded GOP as a reference to the non-key frames (e.g., the P-frames) is reduced, so that more bits may be allocated to the non-key frames to improve the reconstruction quality of the non-key frames. When the motion of the to-be-coded video is less intense, it indicates that the change of the image content between the image frames is smaller. In this situation, the significance of the key frame (e.g., the I-frame) in the to-be-coded GOP as a reference to the non-key frames (e.g., the P-frames) is increased, so that more bits may be allocated to the key frame to improve the reconstruction quality of the key frame and the inter-frame prediction efficiency of the non-key frames. After the $GMV_{weighted}$ is determined, the $GMV_{weighted}$ may be used to adjust the quantization parameter of the I-frame and adjust the bit allocation between the I-frame and the P-frames. Specifically, reducing the quantization parameter value may increase the number of bits allocated to code the I-frame, and increasing the quantization parameter value may reduce the number of bits allocated to code the I-frame.

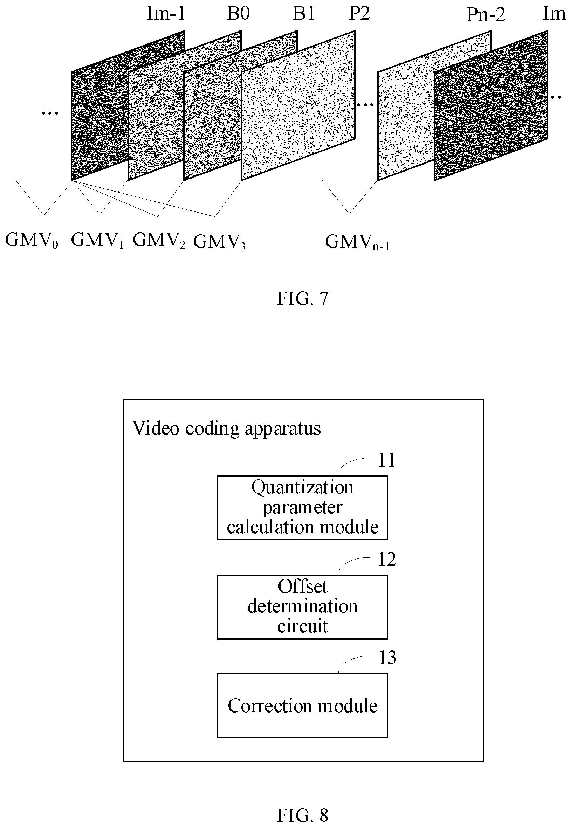

In another example, referring to FIG. 7, in some other embodiments, each GOP includes 1 I-frame and one or more P-frames and B-frames. For example, the first four image frames in the GOP may be $I_0$, $B_0$, $B_1$, and $P_2$. In this situation, unlike the previous example, $GMV_1$ represents the GMV of $B_0$ relative to $I_0$, $GMV_2$ represents the GMV of $B_1$ relative to $I_0$, and $GMV_3$ represents the GMV of $P_2$ relative to $I_0$. That is, the $GMV_i$ ($i = 0, 1, 2, ..., n-1$) of each image frame in the m-th GOP represents the GMV of each image frame relative to the reference frame for forward prediction. It should be understood that, for the B-frame, its GMV may also be the GMV of the B-frame relative to the reference frame (I-frame or P-frame) for backward prediction. In this situation, a third specified formula (3') may be used to calculate the weighted $GMV_{weighted}$ of the current to-be-coded key frame:

$$GMV_{weighted} = \sum_{i=1}^{n} W(GMV_{i-1}) * GMV_{i-1},\qquad (3')$$

In the formula (3'), $W(GMV_{i-1})$ represents the weight of $GMV_{i-1}$, which may be the weight in the formula (3), may be specified according to the compression ratio of each image frame, or may use other weighting methods. The choice is not limited by the present disclosure.

In some embodiments, in the process of calculating the weighted $GMV_{weighted}$ of the current to-be-coded key frame, the non-key frame in the candidate GOP may have more than one reference frame. For example, the P-frame may have more than one forward reference frames, and the B-frame may have forward and backward reference frames. In this situation, in the process of calculating the GMV of the non-key frame, the GMV relative to one of the reference frames may be selected, or the GMVs relative to all or some of the reference frames may be processed according to a pre-determined formula (e.g., averaging, selecting a close frame, or selecting a distant frame) to obtain the GMV of the non-key frame. After the $GMV_{n-1}$ is obtained, the third specified formular (3') may be used to calculate the subsequent weighted $GMV_{weighted}$ for the non-key frame.

In one embodiment, determining the weighted GMV of the current to-be-coded key frame according to the GMV of the key frame and the GMVs of the non-key frames in the candidate coding GOP may include: according to a pre-configured rule, selecting the GMVs of some of the image frames from the GMV of the key frame and the GMVs of the non-key frames in the candidate coding GOP; and performing a weighted summation on the selected GMVs of some of the images frames to obtain the weighted GMV of the current to-be-coded key frame.

For example, the pre-configured rule may be selecting, from n GMVs, m GMVs that are close to the current to-be-coded key frame, selecting odd number of GMVs from n GMVs, or selecting even number of GMVs from n GMVs.

In one embodiment, the quantization parameter offset may be a quantization parameter offset value. Correspondingly, at S103, determining the quantization parameter for video coding the current to-be-coded key frame according to the initial quantization parameter and the quantization parameter offset may include: adding the quantization parameter offset value (QP_offset) to the initial quantization parameter ($QP_0$) to obtain the quantization parameter (QP) for the current to-be-coded key frame.

For example, the quantization parameter offset value may be determined based on the mapping relationship between the weighted $GMV_{weighted}$ and the quantization parameter offset (QP_offset) shown in Table 1 below.

Table 1

| Condition | QP_offset |
|---|---|
| $GMV_{weighted} <= 10$ | -4 |
| $10 < GMV_{weighted} <= 20$ | -3 |
| $20 < GMV_{weighted} <= 40$ | -2 |
| $40 < GMV_{weighted} <= 100$ | -1 |
| $GMV_{weighted} > 100$ | 0 |

In Table 1, when $GMV_{weighted} < 10$, it means the motion of the video content is modest. The I-frame is a significant reference for the subsequent P-frame. In this situation, reducing the value of the QP_offset may allow more bits to be used for improving the I-frame quality, which helps to improve the quality of the entire cycle (i.e., the GOP where the I-frame is located). When $GMV_{weighted} > 100$, it means the motion of the video content is vigorous. The I-frame is an insignificant reference for the subsequent P-frame. In this situation, increasing the value of the QP_offset may allow less bits to be used for coding the I-frame (but the quality of the I-frame is often no worse than the quality of the succeeding P-frame), which helps to improve the coding quality of the succeeding P-frame.

After the quantization parameter offset value is determined, the following formula (4) may be used to calculate the quantization parameter (QP) of the current to-be-coded key frame:

$$QP = QP_0 + QP\_offset \qquad (4)$$

In one embodiment, the quantization parameter offset is a quantization coefficient. Correspondingly, at S103, determining the quantization parameter used for video coding the current to-be-coded key frame according to the initial quantization parameter and the quantization parameter offset may include: multiplying the initial quantization parameter by the quantization parameter offset coefficient to obtain the quantization parameter of the current to-be-coded key frame.

For example, the quantization parameter offset coefficient may be determined based on the mapping relationship between the weighted $GMV_{weighted}$ and the quantization parameter offset (QP_offset) shown in Table 2 below.

Table 2

| Condition | QP_offset |
|---|---|
| $GMV_{weighted} <= n1$ | 0.7 |
| $n1 < GMV_{weighted} <= n2$ | 0.75 |
| $n3 < GMV_{weighted} <= n4$ | 0.8 |
| $n4 < GMV_{weighted} <= n5$ | 0.9 |
| $GMV_{weighted} > n6$ | 1 |

In Table 2, when $GMV_{weighted} < n1$, it means the motion of the video content is modest. The I-frame is a significant reference for the subsequent P-frame. In this situation, reducing the value of the QP_offset may allow more bits to be used for improving the I-frame quality, which helps to improve the quality of the entire cycle (i.e., the GOP where the I-frame is located). When $GMV_{weighted} > n6$, it means the motion of the video content is vigorous. The I-frame is an insignificant reference for the subsequent P-frame. In this situation, increasing the value of the QP_offset may allow less bits to be used for coding the I-frame (but the quality of the I-frame is often no worse than the quality of the succeeding P-frame), which helps to improve the coding quality of the succeeding P-frame.

After the quantization parameter offset coefficient is determined, the following formula (5) may be used to calculate the quantization parameter (QP) of the current to-be-coded key frame:

$$QP = QP_0 * QP\_offset \qquad (5)$$

Based on the same concept, referring to FIG. 8, the embodiments of the present disclosure provide a video coding apparatus. The video coding apparatus includes a quantization parameter calculation module 11, an offset determination module 12, and a correction module 13.

The quantization parameter calculation module 11 is used to determine the initial quantization parameter of the to-be-coded key frame in the current to-be-coded GOP (also referred to as the current to-be-coded key frame). The offset determination module 12 is used to determine the quantization parameter offset of the current to-be-coded key frame. The correction module 13 is used to determine the quantization parameter for video coding the current to-be-coded key frame according to the initial quantization parameter and the quantization parameter offset.

In one embodiment, the quantization parameter calculation module 11 may be used to calculate a target number of bits for video coding the current to-be-coded key frame, and determine the initial quantization parameter of the current to-be-coded key frame according to the target number of bits and the total number of pixels of the current to-be-coded key frame.

In one embodiment, the quantization parameter calculation module 11 may be used to obtain pre-configured target bit rate and frame rate, and calculate the target number of bits for video coding the current to-be-coded key frame according to the target bit rate and the frame rate.

In one embodiment, the quantization parameter calculation module 11 may be used to perform a calculation on the target bit rate and the frame rate according to the first specified formula (1) to obtain the target number of bits.

In one embodiment, the quantization parameter calculation module 11 may be used to perform a calculation on the target number of bits and the total number of pixels of the current to-be-coded key frame according to the second specified formula (2) to obtain the initial quantization parameter of the current to-be-coded key frame.

In one embodiment, the offset determination module 12 may be used to determine a candidate coding GOP, determine a GMV of the key frame and a GMV of the non-key frame in the candidate coding GOP, and determine the quantization parameter offset of the current to-be-coded key frame according to the GMV of the key frame and the GMVs of the non-key frames in the candidate coding GOP.

The candidate coding GOP may be the current to-be-coded GOP and/or the GOP preceding the current to-be-coded GOP at least by one.

In one embodiment, the offset determination module 12 may be used to determine the GMV of the image frame according to the GMV of the image frame relative to a forward reference frame and/or the GMV of the image frame relative to a backward reference frame.

In one embodiment, the offset determination module 12 may be used to calculate, for any image frame, a motion vector of the image frame relative to the reference image frame thereof as the GMV of the image frame.

In one embodiment, the offset determination module 12 may be used to divide any image frame into a plurality of regions, calculate the motion vector of each region in the image frame relative to the corresponding region in the reference image frame thereof, and calculate the average of the absolute values of the motion vectors of all the regions in the image frame as the GMV of the image frame.

In one embodiment, the offset determination module 12 may be used to determine a weighted GMV of the current to-be-coded key frame according to the GMV of the key frame and the GMVs of the non-key frames in the candidate coding GOP, and determine the quantization parameter offset of the current to-be-coded key frame according to a pre-configured mapping relationship between the weighted GMV and the quantization parameter offset.

In one embodiment, the offset determination module 12 may be used to perform a weighted summation of on the GMV of the key frame and the GMVs of the non-key frames in the candidate coding GOP to obtain the weighted GMV of the current to-be-coded key frame.

In one embodiment, the offset determination module 12 may be used to select, according to a pre-configured rule, the GMVs of some of the image frames from the GMV of the key frame and the GMVs of the non-key frames in the candidate coding GOP, and perform a weighted summation on the selected GMVs of some of the images frames to obtain the weighted GMV of the current to-be-coded key frame.

In one embodiment, the weight of the GMV of the image frame and the interval between the image frame and the current to-be-coded key frame may be configured in a negative correlation relationship.

In one embodiment, the quantization parameter offset is a quantization parameter offset value. The correction module 13 may be used to add the quantization parameter offset value to the initial quantization parameter to obtain the quantization parameter of the current to-be-coded key frame.

In one embodiment, the quantization parameter offset is a quantization parameter offset coefficient. The correction module 13 may be used to multiply the initial quantization parameter by the quantization parameter offset coefficient to obtain the quantization parameter of the current to-be-coded key frame.

For the implementation process of the functions and roles of each module in the above-described apparatus, reference can be to the implementation process of the corresponding steps in the above described methods, and details will not be repeated herein.

For the apparatus embodiments, because the apparatus embodiments basically correspond to the method embodiments, reference can be made to the part of the description of the method embodiments. The above described apparatus embodiments are merely illustrative. The units described as separate components may or may not be physically separated, and the components displayed as the units may or may not be physical units. That is, they may be located in one place, or may be distributed to multiple network units. Some or all of the modules may be selected according to actual needs to achieve the objectives of the solutions of the present disclosure. Those of ordinary skill in the art may understand and implement them without creative work.

Based on the same inventive concept, the embodiments of the present disclosure also provide a computer-readable storage medium, on which a computer program is stored. The computer program may be executed by a processor to implement the steps of the video coding method in the above described embodiments.

Optionally, the storage medium may be a memory.

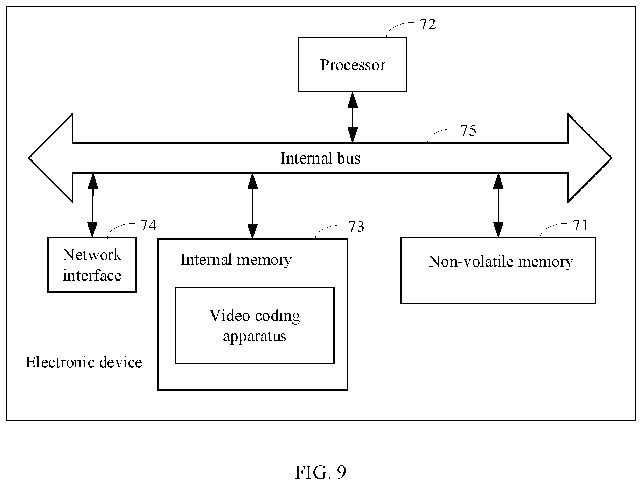

Based on the same concept, referring to FIG. 9, the embodiments of the present disclosure also provide an electronic device. The electronic device includes a memory 71 (e.g., a non-volatile memory), a processor 72, and a computer program stored on the memory 71 and running on the processor 72. The processor 72 executes the computer program to implement the steps of the video coding method in the embodiments of the present disclosure. The electronic device may be, for example, a video encoder.

As shown in FIG. 9, the electronic device often further includes an internal memory 73, a network interface 74, and an internal bus 75. In addition to these components, the electronic device may also include other hardware, which will not be described herein.

It should be pointed out that the video coding apparatus may be implemented by software. As a logical apparatus, it is formed by having the processor 72 of the electronic device read the computer program instructions stored in the non-volatile memory into the internal memory 73 for execution.

The embodiments of the subject and the functional operations described in the specification may be implemented in the following form: a tangible computer software or firmware, a computer hardware including the structures or equivalent disclosed in the specification, or a combination of one or more of software and hardware. The embodiments of the subject described in the specification may be implemented by one or more computer programs, that is, one or more modules of the computer program instructions coded in a tangible and non-transitory program carrier and executed by a data processing apparatus or controlling the operation of the data processing apparatus. Alternatively or additionally, the program instructions may be coded into artificially generated propagation signals, such as machine-generated electrical, optical, or electromagnetic signals. The signals are generated to code and transmit the information to a suitable receiver apparatus for being executed by the data processing apparatus. The computer storage medium may be a machine-readable storage device, a machine-readable memory board, a random or serial access memory device, or combinations thereof.

The processing and logic flow described in the specification may be implemented by one or more programmable computers executing one or more computer programs. The corresponding functions may be performed by operating the input data and generating the output data. The processing and logic flow may also be implemented by special logic circuits, such as field programmable gate arrays (FPGAs) or application specific integrated circuits (ASIC), and the apparatus may also be implemented by the special logic circuits.

The computer suitable for executing the computer programs may include, for example, a general-purpose and/or special-purpose microprocessor, or any other types of central processing units (CPU). In general, the CPU receives instructions and data from read-only memory (ROM) and/or random-access memory (RAM). The basic components of the computer may include the CPU for implementing or executing the instructions and one or more memory devices for storing the instructions and data. In general, the computer may also include one or more mass storage devices for storing the data, such as magnetic disks, magneto-optical disks, or optical disks, or the computer may be operatively coupled to the mass storage devices to receive the data or transmit the data, or the computer may support both. However, the computer does not have to include such devices. In addition, the computer may be embedded into another device, for example, a mobile phone, a personal digital assistant (PDA), a mobile audio or video player, a game console, a global positioning system (GPS) receiver, or a portable storage device such as a universal serial bus (USB) flash drive, to name a few.

The computer-readable medium suitable for storing the computer program instructions and data may include all forms of non-volatile memories, media, and memory devices, such as semiconductor memory devices (e.g., EPROM, EEPROM, and flash device), magnetic disks (e.g., internal hard drives or portable drives), magneto-optical disks, CD-ROM, and DVD-ROM. The processor and the memories may be supplemented by or incorporated into dedicated logic circuits.

Although the specification contains many specific implementation details, these should not be construed as limiting the scope of any invention or the scope of the claims, but are mainly used to describe the features of the embodiments of the present disclosure. Certain features described in multiple embodiments in the specification may also be implemented in combination in a single embodiment. On the other hand, the features described in a single embodiment may also be implemented separately in multiple embodiments or any suitable subcombinations. In addition, although the features may be implemented in the certain combinations and may even be initially claimed as such, one or more features from the claimed combination may in some cases be removed from the combination, and the claimed combination may refer to the sub-combination or variants of the sub-combination.

Similarly, although the operations are depicted in a specific order in the drawings, this should not be construed as requiring these operations to be performed in the specific order shown or sequentially, or requiring all illustrated operations to be performed to achieve the desired result. In some cases, multitasking and parallel processing may be advantages. In addition, the separation of various system circuits and components in the above embodiments should not be construed as requiring such separation in all embodiments, and it should be understood that the described program components and the system may often be integrated together into a single software product, or packaged into multiple software products.

Thus, the embodiments of the subject have been described. Other embodiments are within the scope of the disclosure. In some cases, the actions recited in the claims may be performed in a different order and still achieve the desired result. In addition, the processes depicted in the drawings are not necessarily in the specific order shown or sequentially to achieve the desired result. In some cases, multitasking and parallel process may be advantageous.

The above disclosed are only some of the embodiments of the present disclosure, which should not be used to limit the scope of the present disclosure. Therefore, any modifications, equivalent changes, and improvements made within the spirit and principle of the present disclosure still fall within the scope of the present disclosure.

## Claims

1. A video coding method comprising:

    determining an initial quantization parameter of a to-be-coded key frame in a current to-be-coded group of pictures (GOP);
    determining a quantization parameter offset of the to-be-coded key frame; and
    determining a quantization parameter for video coding the to-be-coded key frame according to the initial quantization parameter and the quantization parameter offset.

2. The method of claim 1, wherein determining the initial quantization parameter of the to-be-coded key frame in the current to-be-coded GOP includes:

    calculating a target number of bits for video coding the to-be-coded key frame; and
    determining the initial quantization parameter of the to-be-coded key frame according to the target number of bits and a total number of pixels of the to-be-coded key frame.

3. The method of claim 2, wherein calculating the target number of bits for video coding the to-be-coded key frame includes:

    obtaining pre-configured target bit rate and frame rate; and
    calculating the target number of bits according to the target bit rate and the frame rate.

4. The method of claim 3, wherein calculating the target number of bits according to the target bit rate and the frame rate includes:
performing calculation on the target bit rate and the frame rate according to a first specified formula to obtain the target number of bits.

5. The method of claim 4, wherein the first specified formula is:

$$targetBits = \frac{targetBitrate}{frameRate},$$

wherein *targetBits* is the target number of bits, *targetBitrate* is the target bit rate, and *frameRate* is the frame rate.

6. The method of claim 2, wherein determining the initial quantization parameter of the to-be-coded key frame according to the target number of bits and the total number of pixels of the to-be-coded key frame includes:
performing calculation on the target number of bits and the total number of pixels of the to-be-coded key frame according to a second specified formula to obtain the initial quantization parameter of the to-be-coded key frame.

7. The method of claim 6, wherein the second specified formula is:

$$QP0 = \frac{\ln\left(\frac{targetBits}{numOfPixel}\right) - \beta}{\alpha},$$

where *numOfPixel* is the total number of pixels of the current to-be-coded key frame, and $\alpha$ and $\beta$ are constants.

8. The method of claim 1, wherein determining the quantization parameter offset of the to-be-coded key frame includes:

   determining a candidate coding GOP;
   determining a global motion vector (GMV) of the key frame and GMVs of non-key frames in the candidate coding GOP; and
   determining the quantization parameter offset of the to-be-coded key frame according to the GMV of the key frame and the GMVs of the non-key frames in the candidate coding GOP.

9. The method of claim 8, wherein the candidate coding GOP is the current to-be-coded GOP and/or a coding GOP preceding the current to-be-coded GOP at least by one.

10. The method of claim 8, wherein determining the GMV of an image frame includes:
    determining the GMV of the image frame according to a GMV of the image frame relative to a forward reference frame and/or a GMV of the image frame relative to a backward reference frame.

11. The method of claim 10, wherein determining the GMV of the image frame includes:

    for any image frame, calculating a motion vector of the image frame relative to a reference image frame thereof as the GMV of the image frame; or
    for any image frame, dividing the image frame into a plurality of regions, calculating a motion vector of each region in the image frame relative to a corresponding region in the reference image frame, and calculating an average of absolute values of the motion vectors of all the regions in the image frame as the GMV of the image frame.

12. The method of claim 8, wherein determining the quantization parameter offset of the to-be-coded key frame according to the GMV of the key frame and the GMVs of the non-key frames in the candidate coding GOP includes:

    determining a weighted GMV of the to-be-coded key frame according to the GMV of the key frame and the GMVs of the non-key frames in the candidate coding GOP; and
    determining the quantization parameter offset of the to-be-coded key frame according to a pre-configured mapping relationship between the weighted GMV and the quantization parameter offset.

13. The method of claim 12, wherein determining the weighted GMV of the to-be-coded key frame according to the GMV of the key frame and the GMVs of the non-key frames in the candidate coding GOP includes:
    performing a weighted summation on the GMV of the key frame and the GMVs of the non-key frames in the candidate coding GOP to obtain the weighted GMV of the current to-be-coded key frame.

14. The method of claim 12, wherein determining the weighted GMV of the to-be-coded key frame according to the GMV of the key frame and the GMVs of the non-key frames in the candidate coding GOP includes:

    selecting the GMVs of some of the image frames from the GMV of the key frame and the GMVs of the non-key frames in the candidate coding GOP according to a pre-configured rule; and
    performing a weighted summation on the selected GMVs of some of the images frames to obtain the weighted GMV of the current to-be-coded key frame.

15. The method of claim 13 or 14, wherein a weight of the GMV of the image frame and an interval between the image frame and the current to-be-coded key frame have a negative correlation relationship.

16. The method of claim 1, wherein:

the quantization parameter offset is a quantization parameter offset value; and
determining the quantization parameter for video coding the to-be-coded key frame according to the initial quantization parameter and the quantization parameter offset includes: adding the quantization parameter offset value to the initial quantization parameter to obtain the quantization parameter for the current to-be-coded key frame.

17. The method of claim 1, wherein:

the quantization parameter offset is a quantization parameter offset coefficient; and
determining the quantization parameter for video coding the to-be-coded key frame according to the initial quantization parameter and the quantization parameter offset includes: multiplying the initial quantization parameter by the quantization parameter offset coefficient to obtain the quantization parameter for the current to-be-coded key frame.

18. A video coding apparatus, comprising:

a quantization parameter calculation module configured to determine an initial quantization parameter of a to-be-coded key frame in a current to-be-coded group of pictures (GOP); an offset determination module configured to determine a quantization parameter offset of the to-be-coded key frame; and
a correction module configured to determine a quantization parameter for video coding the to-be-coded key frame according to the initial quantization parameter and the quantization parameter offset.

19. The apparatus of claim 18, wherein the quantization parameter calculation module is configured to:

calculate a target number of bits for video coding the to-be-coded key frame; and
determine the initial quantization parameter of the to-be-coded key frame according to the target number of bits and a total number of pixels of the to-be-coded key frame.

20. The apparatus of claim 19, wherein the quantization parameter calculation module is configured to:

obtain pre-configured target bit rate and frame rate; and
calculate the target number of bits according to the target bit rate and the frame rate.

21. The apparatus of claim 20, wherein the quantization parameter calculation module is configured to:
perform calculation on the target bit rate and the frame rate according to a first specified formula to obtain the target number of bits.

22. The apparatus of claim 21, wherein the first specified formula is:

$$targetBits = \frac{targetBitrate}{frameRate},$$

wherein *targetBits* is the target number of bits, *targetBitrate* is the target bit rate, and *frameRate* is the frame rate.

23. The apparatus of claim 19, wherein the quantization parameter calculation module is configured to:
perform calculation on the target number of bits and the total number of pixels of the to-be-coded key frame according to a second specified formula to obtain the initial quantization parameter of the to-be-coded key frame.

24. The apparatus of claim 23, wherein the second specified formula is:

$$QP0 = \frac{\ln\left(\frac{targetBits}{numOfPixel}\right) - \beta}{\alpha},$$

where *numOfPixel* is the total number of pixels of the current to-be-coded key frame, and $\alpha$ and $\beta$ are constants.

25. The apparatus of claim 18, wherein the offset determination module is configured to:

determine a candidate coding GOP;
determine a global motion vector (GMV) of the key frame and GMVs of the non-key frames in the candidate coding GOP; and
determine the quantization parameter offset of the to-be-coded key frame according to the GMV of the key frame and the GMVs of the non-key frames in the candidate coding GOP.

26. The apparatus of claim 25, wherein the candidate coding GOP is the current to-be-coded GOP and/or a coding GOP preceding the current to-be-coded GOP at least by one.

27. The apparatus of claim 25, wherein the offset determination module is configured to:
determine the GMV of the image frame according to a GMV of the image frame relative to a forward reference frame and/or a GMV of the image frame relative to a backeard reference frame.

28. The apparatus of claim 27, wherein the offset determination module is configured to:

for any image frame, calculate a motion vector of the image frame relative to a reference image frame thereof as the GMV of the image frame; or
for any image frame, divide the image frame into a plurality of regions, calculate the motion vector of each region in the image frame relative to a corresponding region in the reference image frame, and calculate an average of absolute values of the motion vectors of all the regions in the image frame as the GMV of the image frame.

29. The apparatus of claim 25, wherein the offset determination module is configured to:

determine a weighted GMV of the to-be-coded key frame according to the GMV of the key frame and the GMVs of the non-key frames in the candidate coding GOP; and
determine the quantization parameter offset of the to-be-coded key frame according to a pre-configured mapping relationship between the weighted GMV and the quantization parameter offset.

30. The apparatus of claim 29, wherein the offset determination module is configured to:
perform a weighted summation on the GMV of the key frame and the GMVs of the non-key frames in the candidate coding GOP to obtain the weighted GMV of the current to-be-coded key frame.

31. The apparatus of claim 29, wherein the offset determination module is configured to:

select the GMVs of some of the image frames from the GMV of the key frame and the GMVs of the non-key frames in the candidate coding GOP according to a pre-configured rule; and
perform a weighted summation on the selected GMVs of some of the images frames to obtain the weighted GMV of the current to-be-coded key frame.

32. The apparatus of claim 30 or 31, wherein a weight of the GMV of the image frame and an interval between the image frame and the current to-be-coded key frame have a negative correlation relationship.

33. The apparatus of claim 18, wherein:

the quantization parameter offset is a quantization parameter offset value; and
the correction module is configured to add the quantization parameter offset value to the initial quantization parameter to obtain the quantization parameter for the current to-be-coded key frame.

34. The apparatus of claim 18, wherein:

the quantization parameter offset is a quantization parameter offset coefficient; and
the correction module is configured to multiply the initial quantization parameter by the quantization parameter offset coefficient to obtain the quantization parameter for the current to-be-coded key frame.

35. A computer-readable storage medium storing a computer program, wherein the computer program is executed by a processor to implement the steps of the method of any of claims 1-17.

36. An electronic device including a memory, a processor, and a computer program stored in the memory and executed by the processor, wherein the processor executes the computer program to implement the steps of the method of any of claims 1-17.

FIG. 1

FIG. 2

FIG. 3

FIG. 4

401

FIG. 5

Im-1   P0   P1   P2   Pn-2   Im

...   ...   ...

$GMV_0$  $GMV_1$  $GMV_2$  $GMV_3$   $GMV_{n-1}$

FIG. 6

FIG. 7

FIG. 8

FIG. 9

## INTERNATIONAL SEARCH REPORT

| International application No. |
| --- |
| **PCT/CN2018/097668** |

**A.     CLASSIFICATION OF SUBJECT MATTER**

H04N 19/124(2014.01)i

According to International Patent Classification (IPC) or to both national classification and IPC

**B.     FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI: 量化参数, QP, 初始, 预设, 偏移, 校正, 调整, 全局运动矢量; VEN, USTXT, EPTXT, JCTVC, JVET: quantization, quantisation, parameter?, QP, initial, initialization, preset, adjust+, offset, global motion vector

**C.     DOCUMENTS CONSIDERED TO BE RELEVANT**

| Category* | Citation of document, with indication, where appropriate, of the relevant passages | Relevant to claim No. |
| --- | --- | --- |
| X | CN 107040788 A (NANJING YUANYAN INFORMATION TECHNOLOGY CO., LTD.) 11 August 2017 (2017-08-11) description, paragraphs [0054]-[0100] and [0131]-[0137] | 1-36 |
| X | US 2015326857 A1 (ZHANG, XIMIN ET AL.) 12 November 2015 (2015-11-12) description, paragraphs [0029]-[0044], and figure 1B | 1-36 |
| A | CN 106664409 A (INTEL CORPORATION) 10 May 2017 (2017-05-10) entire document | 1-36 |
| A | CN 106170979 A (INTEL CORPORATION) 30 November 2016 (2016-11-30) entire document | 1-36 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **21 March 2019** | **28 April 2019** |

| Name and mailing address of the ISA/CN | Authorized officer |
| --- | --- |
| **State Intellectual Property Office of the P. R. China** **No. 6, Xitucheng Road, Jimenqiao Haidian District, Beijing** **100088** **China** | |
| Facsimile No. **(86-10)62019451** | Telephone No. |

Form PCT/ISA/210 (second sheet) (January 2015)

International application No.

**PCT/CN2018/097668**

| Patent document cited in search report | | | Publication date (day/month/year) | Patent family member(s) | | | Publication date (day/month/year) |
|---|---|---|---|---|---|---|---|
| CN | 107040788 | A | 11 August 2017 | None | | | |
| US | 2015326857 | A1 | 12 November 2015 | None | | | |
| CN | 106664409 | A | 10 May 2017 | EP | 3175619 | A1 | 07 June 2017 |
| | | | | US | 9549188 | B2 | 17 January 2017 |
| | | | | WO | 2016018493 | A1 | 04 February 2016 |
| | | | | BR | 112016029992 | A2 | 22 August 2017 |
| | | | | EP | 3175619 | A4 | 28 February 2018 |
| | | | | US | 2016037170 | A1 | 04 February 2016 |
| CN | 106170979 | A | 30 November 2016 | US | 9661329 | B2 | 23 May 2017 |
| | | | | US | 2015319437 | A1 | 05 November 2015 |
| | | | | KR | 101836027 | B1 | 19 April 2018 |
| | | | | WO | 2015167704 | A1 | 05 November 2015 |
| | | | | EP | 3138287 | A4 | 16 May 2018 |
| | | | | KR | 20160129045 | A | 08 November 2016 |
| | | | | EP | 3138287 | A1 | 08 March 2017 |

Form PCT/ISA/210 (patent family annex) (January 2015)